# EUROPEAN PATENT SPECIFICATION

(11) **EP 0 775 047 B1**
(45) Date of publication and mention of the grant of the patent: **07.03.2001**
(21) Application number: 95925904.5
(22) Date of filing: 18.07.1995
(51) Int. Cl.: B29B 17/00, B29C 39/00, E01C 3/00

(54) **A METHOD FOR RECYCLING AND DISPOSING OF WASTE MATERIALS**
VERFAHREN ZUR WIEDERVERWENDUNG UND BESEITIGUNG VON ABFALLSTOFFEN
PROCEDE DE RECYCLAGE ET DE MISE AU REBUT DE DECHETS

(30) Priority: 18.07.1994 GB 9414455; 18.11.1994 GB 9423327
(43) Date of publication of application: 28.05.1997
(73) Proprietor: Bennett, Victor George, Wraysbury Middlesex TW19 5NR (GB)
(72) Inventor: Kemp, Thomas Malcolm, Buckhurst Hill Essex IG9 5AD (GB); Crawley, Donald Roy, 2930 Brasschaat (BE)
(74) Representative: Johnstone, Douglas Ian
(86) International application number: GB9501686
(87) International publication number: WO9602373

(56) References cited:
- EP-A- 0 633 109
- DE-C- 4 230 157
- FR-A- 2 258 414
- FR-A- 2 684 027
- PLASTICS ENGINEERING, vol.46, no.4, April 1990, BROOKFIELD, CONN., US pages 51 - 53 JOHN MACZKO 'AN ALTERNATIVE TO LANDFILLS FOR MIXED PLASTIC WASTE'

## Description

This invention relates to a method for manufacturing a multi-purpose building material from various waste materials. The invention also relates to products obtainable by the method, uses of the products and a method for the disposal of waste materials.

The costs of disposing of domestic and industrial waste continue to increase, due to increases in the amount of waste products produced and the. lack of landfills and other means for disposing of waste. In view of this, as well as the increase in pressure to dispose of waste in ways less harmful to the environment, a number of methods for recycling waste have been proposed.

Previous methods for recycling waste require the waste to be separated into specific waste types, such as glass, plastic, metal, cardboard and the like. Separating waste is time consuming, labour intensive and expensive. Furthermore, waste separation has to be done accurately. If for example, plastics material is separated from mixed waste for recycling and the separated plastics material is contaminated by a single piece of glass, major problems in recycling and possible damage to the recycling apparatus can occur.

Previous methods for recycling waste in addition to requiring the waste to be separated, generally, require the separated waste to be clean. This is a major problem as waste is generally dirty and cleaning procedures are expensive, time consuming and can cause further damage to the environment through the use of detergents and other cleaning products.

One type of waste material which is particularly desirable to recycle is plastics material.

Plastics material is used more and more in goods and packaging and is extremely difficult to degrade, thereby posing a major problem to the environment. A number of methods have previously been described for recycling plastics material.

Generally, the previous methods for recycling plastics material require that the plastics material is not only separated from other waste types but also the specific types of plastics material are separated from each other. For example, high density polyethylene, low density polyethylene and polypropylene are separated from plastics materials such as polyvinyl chloride, polyester and polystyrene as described in EP-A-0 568 710. Alternatively, the percentages of the different types of plastics have to be controlled, as described in WO 92/15640, wherein at least 80% of the plastics material is comprised of compounds such as high density polyethylene, low density polyethylene, homopolymers of polypropylene, copolymers of ethylene and propylene, and combinations thereof. The remaining 20% of the plastics material is made up of polymeric materials such as rigid or flexible polyvinyl chloride, polystyrene, polyamides and polycarbonates or combinations thereof. WO 92/15640 refers to charging the wholly plastics waste material and a particulate filler into a mixer and simultaneously heating and mixing until a uniform composition is obtained.

A further prior art method of recycling plastics materials is disclosed in FR-A-2258414. Waste material composed completely of plastics materials is comminuted into particles and mixed with filler material at between 240°C and 400°C.

Generally, previous processes for recycling plastics material comprise the steps of melting the separated and washed plastics materials in an extruder and extruding the plastics composition. The extrudate is then forced into a series of molds and cooled.

The major disadvantages of the previous recycling methods include the need to separate and wash the plastics materials. Previous methods are therefore labour intensive; time consuming and expensive. Furthermore, the extrusion step of previous methods leads to a slow rate of production, approximately two tons a day.

The present invention overcomes the problems and defici-encies of the previous methods for recycling waste material as there is no need to separate the waste and no need to clean the waste material. Furthermore, the present invention has a rate of production of approximately 50 tons an hour and is therefore substantially more efficient.

The product obtained by the method herein described is substantially uniform in its composition and density and can be worked using conventional techniques and tools. The product can be formed into different shapes and forms depending on the required use of the material. Furthermore, contaminated articles such as sharps from hospitals, shot blast contaminated with lead paint, contaminated articles from chemical industries and the like, can be incorporated into the mix where they are encased within the final product and thereby made safe.

The present invention provides a method for manufacturing a multi-purpose building material from domestic and/or industrial waste material comprising providing waste material having a plastics material content between 20% and 65% by weight, shearing the waste material to particles of at most about 50mm in diameter, charging the particulate waste and a particulate filler to a mixer, heating and maintaining the temperature of the mixture between 120°C and 200°C during mixing and mixing until a uniform composition is obtained, and forming the uniform composition into a final product.

The domestic waste and/or industrial waste used can contain any material including glass, metal, cardboard, paper, cloth, masonry and foodstuffs. Preferably, the amount of waste material incorporated into the final product is in the range of 30% to 70% by weight. However, the exact amounts incorporated will depend on the type of waste material used and the desired properties of the final product. The minimum of 20% plastics material may be an integral part of a waste material or at least part can be specifically added to the waste material. In this context, the term plastics material comprises all plastics including thermoplastic, thermosetting, high density and low density plastics, e.g. polystyrene, polyvinyl chloride and polypropylene. The plastics material does not need to be cleaned and a mixture of plastics can be added. Preferably, the amount of plastics present in the final product is between 27% and 60% by weight. More preferably, the amount of plastics present in the final product is about 30% by weight. However, the amount of plastics present in the final product will vary depending upon the desired properties of the final product. For example, if the product is required to float in water, the final product must contain greater than about 50% plastics material.

The particulate filler can be any friable material such as calcium carbonate, asbestos, mica, wollastonite, talc, diatomaceous earth, kaolin clays and carbon filaments. Preferably, the particulate filler is a waste product from another process; such products include fly ash, sand fines, core sand, flue dust, shot blast and alumina dust. A single filler or a combination of fillers can be added and furthermore, contaminated fillers such as shot blast contaminated with lead paint may be used. Preferably, two different particulate fillers are added. More preferably, the particulate filler consists of fly ash and minor additions of either core sand and/or shot blast.

The amount of particulate filler added depends upon the desired properties of the final product being obtained. Preferably, the particulate filler is present in an amount between 30% and 70% by weight of the final product. In a further embodiment of the present invention, the components are dried and/or heated, before entering the mixer. Preferably, the compounds are heated to between 120°C and 200°C before entering the mixer.

Preferably, the waste material and particulate filler are fed into the mixer at equal rates, so that uniform mixing occurs. More preferably, the waste material and particulate filler are fed into the mixer at equal rates by screw or air conveyance.

Mixing occurs at a temperature in the range of 120°C to 200°C, preferably in the range of 150°C to 190°C and, more preferably, at a temperature of about 160°C. However, the exact temperature during mixing will depend on the desired characteristics of the final product.

By limiting the maximum temperature during mixing to 200°C, production of toxic emission from the waste material is eliminated. This is a further advantage over the previous methods of recycling.

An alternative embodiment of the present invention further comprises the additional step of keeping the uniform composition indefinitely at temperatures as low as 120°C, prior to use, in a holding tank.

The uniform mixture can be formed into any desirable shape. Preferably, the heated mixture is rolled or molded into the desired shape by conventional methods. More preferably, the heated mixture is pressed into a mold at high pressure, preferably at 281 kg/cm² for about seven days. The exact molding and forming conditions will vary depending upon the type of product being produced.

The products obtained by the method of this invention are resistant to degradation, will not rot, are resistant to acidic and alkaline conditions, heat resistant, soundproof, extremely strong and have a maximum porosity value of 0.81%.

The product can be worked using conventional techniques and tools and furthermore the product itself can always be recycled by repeating the method herein disclosed.

The product can be used for any type of building or construction purpose. For example, the product can be used as building blocks, foundations for buildings (the product would also have the added advantage of eliminating the need for damp courses, due to its low porosity value), roof tiles, fence posts and panels, paving slabs and tiles, water gulleys, playground surfaces, roads and paths, pipes (especially sewage pipes), pushing walls and floors for waste transfer stations, floors for car parks and garage forecourts, groins for land and beach reclamation, tetropods and acropods for coastal defences and blocks for sea walls and marine walls. The product can also be used as a membrane for landfills and other similar purposes.

In a further embodiment of the present invention, a number of additives can be included in the product depending on the ultimate use of the final product, such as ultraviolet light absorbers, anti-fungal agents, fire retardants, heat insulators, colouring agents, impact modifiers and reinforcing agents (such as chopped strands of glass fibers) viscosity stabilizers and various processing aids.

In another further embodiment of the present invention, contaminating matter such as hospital waste (including sharps), contaminated matter from chemical industries and the like can be incorporated into the product.

Any contaminated components will become coated and encapsulated by the plastics component of the mixture. As the plastics component melts it envelops and forms a coat around the non-plastics components of the mix. Furthermore, in the preferred forming step, the plastics component is differentially distributed on the external surfaces ofa molded article. Thus, the non-plastic components are encased within the interior of the article, thereby sealing them from the external environment.

In a further embodiment, additional plastics material can be added to the mixture during mixing. The addition of plastics material at this point in the process can lead to a development of a mottled or marble appearance on the surface of the final product. Preferably, the additional plastics material is in the form of plastic sheeting or similar material.

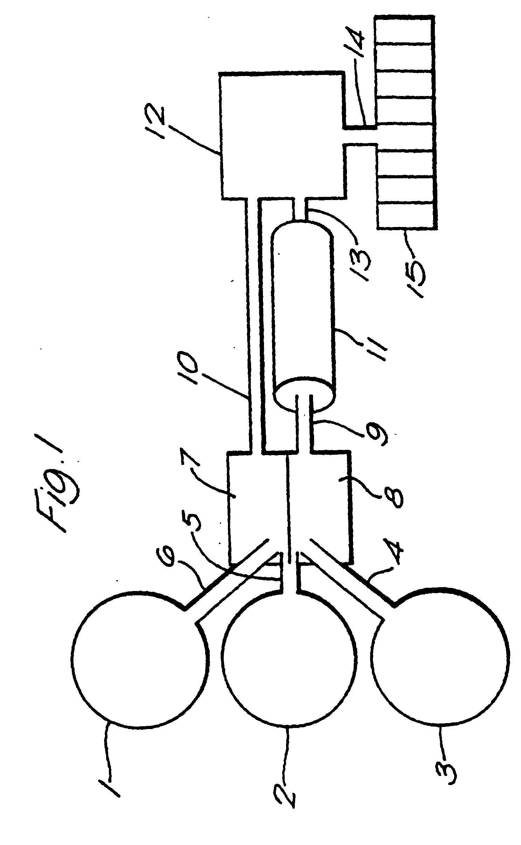

A production plant suitable for carrying out the method according to the invention is shown in Figure 1. The production plant comprises means for storing the product components, heating and mixing means, means for feeding the components to the heating and mixing means and means for forming a final product. The means for weighing the components and means for drying the components may also be included within the production plant.

Specific embodiments of the process and products according to the present invention will now be described further by way of example with reference to the accompanying drawing in which: FIGURE 1 illustrates schematically a production plant for performing the claimed method.

### Example

### Production of twenty ton blocks for use as sea walls

Twenty ton sea walls are produced using the apparatus illustrated in Figure 1, wherein the various materials necessary for forming the final product are stored in a number of storage silos (1, 2, 3). The various materials. are fed into weigh vessels (7, 8) by screw conveyors (4, 5, 6). The various materials are weighed and preferentially distributed between a rotary drier (11) and a mixer (12) by screw conveyors (9, 10). The various components which are fed into the rotary drier (11) are subsequently fed to the mixer (12) by a screw conveyor (13). The various components are mixed in the mixer (12) and then the uniform mixture obtained is fed via a screw conveyor (14) into twenty ton molds (15). The twenty ton molds are pressed at pressures of 281 kg/cm² for seven days. The final product can be easily removed from the molds (15).

The above embodiments have been described by way of illustration only. Many other processes, products and uses of the products will be apparent to one skilled in the art. Furthermore, various modifications, additions or substitutions may be made without departing from the scope of the present invention, as according to the accompanying claims.

## Claims

1. A method for manufacturing a multi-purpose building material from domestic and/or industrial waste material comprising:
providing waste material having a plastics material content between 20% and 65% (w/w);
shearing the waste material to particles of at most about 50mm in diameter;
charging the particulate waste and a particulate filler to a mixer;
heating and maintaining the temperature of the mixture between 120°C and 200°C during mixing;
mixing until a uniform composition is obtained; and
forming the uniform composition into a final product.

2. A method according to claim 1, wherein the plastic content of the final product is between 27% and 60% (w/w).

3. A method according to claim 1 or 2, wherein the plastic content of the final product is about 30% (w/w).

4. A method according to any one of claims 1 to 3, wherein the particulate filler is any friable material.

5. A method according to any one of claims 1 to 4, wherein the particulate filler consists of any one or more of the following materials: fly ash, sand fines, core sand, flu dust and alumina dust.

6. A method according to any one of claims 1 to 5, wherein the particulate filler is present in the final product in an amount between 30% and 70% (w/w).

7. A method according to any one of the claims 1 to 6, wherein the temperature during mixing is between 150°C and 190°C.

8. A method according to any one of claims 1 to 7 wherein the temperature during mixing is about 160°C.

9. A method according to any one of claims 1 to 8, wherein the uniform mixture is formed into the final product by rolling or molding.

10. A method according to any one of claims 1 to 9, wherein the uniform mixture is pressed into molds at pressures of about 281 kg/cm² for about seven days.

11. A method according to any one of claims 1 to 10, wherein additives are included in the mixture.

12. A method according to claim 11, wherein the additives consist of one or more of the following: ultraviolet light absorbers, anti-fungal agents, fire retardants, heat insulators, impact modifiers and reinforcing agents, viscosity stabilisers, colouring agents and processing aids.

13. A method according to any one of claims 1 to 12, further comprising adding contaminated matter to the mixture.

14. A method according to anyone of claims 1 to 13, further comprising adding additional plastics material to the mixture during mixing.

15. A method according to anyone of the claims 1 to 14, wherein the waste material and particulate filler are dried before entering the mixer.

16. A method according to anyone of the claims 1 to 15, wherein the waste material and particulate filler are heated to between 120°C and 200°C before entering the mixer.

17. A multi-purpose building material obtainable by the method according to any one of the preceding claims; wherein the multi-purpose material is resistant to degradation, resistant to acidic and alkaline conditions, heat resistant, sound proof, strong and has a maximum porosity value of 0.81%.

18. The use of the multi-purpose building material according to claim 17 as a membrane for landfills, building blocks, foundations for buildings, roof tiles, fence posts and panels, paving slabs and tiles, water gulleys, playground surfaces, roads and paths, pipes, pushing walls and floors for waste transfer stations, floors for car parks and garage forecourts, groins for land and beach reclamation, tetropods and acropods,for coastal defences and blocks for sea walls and marine walls.

## Patentansprüche

1. Ein Verfahren zur Herstellung eines Mehrzweck-Baumaterials aus Haushalts- und/oder Industrieabfällen, welches umfasst:
Bereitstellen von Abfallmaterial mit einem Gehalt an Kunststoffmaterial zwischen 20% und 65% nach Gewicht;
Schreddern des Abfallmaterials zu Partikeln von meist etwa 50mm Durchmesser;
Einbringen des partikelförmigen Abfalls und eines partikelförmigen Füllmaterials in einen Mischer;
Aufheizen und Aufrechterhalten der Temperatur der Mischung zwischen 120°C und 200°C während des Mischens;
Mischen, bis ein gleichförmiges Mischmaterial erhalten wird; und
Formen des gleichförmigen Mischmaterials zu einem Endprodukt.

2. Ein Verfahren nach Anspruch 1, bei dem der Kunststoffgehalt des Endproduktes zwischen 27% und 60% nach Gewicht beträgt.

3. Ein Verfahren nach Anspruch 1 oder 2, bei dem der Kunststoffgehalt des Endproduktes 30% nach Gewicht beträgt.

4. Ein Verfahren nach einem der Ansprüche 1 bis 3, bei dem das partikelförmige Füllmaterial irgend ein zerreibbares Material ist.

5. Ein Verfahren nach einem der Ansprüche 1 bis 4, bei dem das partikelförmige Füllmaterial aus einem oder mehreren der folgen Materialen besteht: Flugasche, feiner Sand, Kernsand, Flugstaub und Aluminiumstaub.

6. Ein Verfahren nach einem der Ansprüche 1 bis 5, bei der Gehalt des partikelförmigen Füllmaterials im Endprodukt zwischen 30% und 70% nach Gewicht beträgt.

7. Ein Verfahren nach einem der Ansprüche 1 bis 6, bei dem die Temperatur während des Mischens zwischen 150°C und 190°C beträgt.

8. Ein Verfahren nach einem der Ansprüche 1 bis 7, bei dem die Temperatur während des Mischens 160°C beträgt.

9. Ein Verfahren nach einem der Ansprüche 1 bis 8, bei dem die gleichförmige Mischung durch Walzen oder Formen zum Endprodukt geformt wird.

10. Ein Verfahren nach einem der Ansprüche 1 bis 9, bei dem die gleichförmige Mischung in Formen gepresst wird, bei einem Druck von etwa 281 kg/cm² für etwa sieben Tage.

11. Ein Verfahren nach einem der Ansprüche 1 bis 10, bei dem der Mischung Additive beigegeben werden.

12. Ein Verfahren nach Anspruch 11, bei dem die Additive aus einem oder mehreren der folgenden Substanzen bestehen: Ultraviolett-Absorber, Anti-Pilz-Mittel, Flammschutzmittel, Wärmeisolatoren, Stoßmodifizierer und Versteifungsmittel, Viskositätsstabilisatoren, Färbstoffe und Aufbereitungsmittel.

13. Ein Verfahren nach einem der Ansprüche 1 bis 12, bei dem der Mischung ferner verunreinigtes Material beigegeben wird.

14. Ein Verfahren nach einem der Ansprüche 1 bis 13, bei dem der Mischung während des Mischens zusätzliches Kunststoffmaterial beigegeben wird.

15. Ein Verfahren nach einem der Ansprüche 1 bis 14, bei dem das Abfallmaterial und das partikelförmige Füllmaterial vor dem Einbringen in den Mischer getrocknet werden.

16. Ein Verfahren nach einem der Ansprüche 1 bis 15, bei dem das Abfallmaterial und das partikelförmige Füllmaterial vor dem Einbringen in den Mischer auf 120°C bis 200°C erhitzt werden.

17. Ein Mehrzweck-Baumaterial hergestellt nach dem Verfahren gemäß einem der vorhergehenden Ansprüche, wobei das Mehrzweck-Material witterungsbeständig, beständig gegen sauere oder alkalische Einflüsse, hitzebeständig, schallbeständig und stabil ist und einen maximalen Porositätswert von 0,81% aufweist.

18. Die Verwendung eines Mehrzweck-Baumaterials gemäß Anspruch 17 als Membrane für Geländeauffüllungen, Bausteine, Fundamente für Bauwerke, Dachplatten, Zaunpfosten und - paneele, Pflastersteine und Fliesen, Wassergullies, Spielplatzflächen, Straßen und Wege, Rohre, Schiebewände und -böden für Abfallumschlagstationen, Bodenbeläge für Parkplätze und Garagenvorplätze, Gewerke für die Land und Strandgewinnung, Tetropoden und Akropoden für den Küstenschutz und Blöcke für See- und Meereswälle.

## Revendications

1. Procédé de fabrication d'un matériau de construction multi-usages à partir de déchets domestiques et/ou industriels, qui consiste:
à mettre à disposition des déchets ayant une teneur en matériaux plastiques comprise entre 20 et 65 % en poids ;
à découper les déchets pour obtenir des particules ayant un diamètre maximal de 50 mm ;
à introduire les déchets particulaires et une matière de charge particulaire dans un mélangeur ;
à chauffer et à maintenir le mélange à une température comprise entre 120 et 200°C pendant l'opération de mélange ;
à mélanger jusqu'à obtention d'une composition uniforme ;
à façonner la composition uniforme pour obtenir un produit fini.

2. Procédé selon la revendication 1, dans lequel la teneur du produit fini en plastique est comprise entre 27 et 60 % (m/m).

3. Procédé selon la revendication 1 ou 2, dans lequel la teneur du produit fini en plastique est d'environ 30 % (m/m).

4. Procédé selon l'une quelconque des revendications 1 à 3, dans lequel la matière de charge particulaire est un matériau friable quelconque.

5. Procédé selon l'une quelconque des revendications 1 à 4, dans lequel la matière de charge particulaire est constituée d'un ou plusieurs quelconques des matériaux suivants : cendres volantes, fines de sable, sable à noyaux, poussière de gueulard et poussière d'alumine.

6. Procédé selon l'une quelconque des revendications 1 à 5, dans lequel la matière de charge particulaire est présente dans le produit fini en une quantité comprise entre 30 et 70 % (m/m).

7. Procédé selon l'une quelconque des revendications 1 à 6, dans lequel la température pendant l'opération de mélange est comprise entre 150 et 190°C.

8. Procédé selon l'une quelconque des revendications 1 à 7, dans lequel la température pendant l'opération de mélange est d'environ 160°C.

9. Procédé selon l'une quelconque des revendications 1 à 8, dans lequel le mélange uniforme est façonné en le produit fini par laminage ou moulage.

10. Procédé selon l'une quelconque des revendications 1 à 9, dans lequel le mélange uniforme est comprimé dans des moules sous des pressions d'environ 281 kg/cm² pendant environ 7 jours.

11. Procédé selon l'une quelconque des revendications 1 à 10, dans lequel des additifs sont incorporés au mélange.

12. Procédé selon la revendication 11, dans lequel les additifs comprennent un ou plusieurs des additifs suivants : des agents absorbant la lumière ultraviolette, des agents antifongiques, des retardateurs de flamme, des isolants thermiques, des modifiants choc et des agents de renfort, des stabilisants de viscosité, des substances colorantes et des auxiliaires de mise en oeuvre.

13. Procédé selon l'une quelconque des revendications 1 à 12, qui consisté en outre à ajouter des matières contaminées au mélange.

14. Procédé selon l'une quelconque des revendications 1 à 13, qui consiste en outre à ajouter un matériau plastique additionnel au mélange pendant l'opération de mélange.

15. Procédé selon l'une quelconque des revendications 1 à 14, dans lequel les déchets et la matière de charge particulaire sont séchés avant d'être introduits dans le mélangeur.

16. Procédé selon l'une quelconque des revendications 1 à 15, dans lequel les déchets et la matière de charge particulaire sont chauffé à une température comprise entre 120 et 200°C avant leur introduction dans le mélangeur.

17. Matériau de construction multi-usages pouvant être obtenu par un procédé selon l'une quelconque des revendications précédentes ; dans lequel la matériau multi-usages résiste à la dégradation, résiste aux conditions acides et alcalines, résiste à la chaleur, est isolé contre le bruit, est robuste et a une porosité maximale de 0,81 %.

18. Utilisation du matériau de construction multi-usages selon la revendication 16 en tant que membrane pour décharges en fouille, blocs de construction, fondations pour bâtiments, tuiles, pieux et panneaux de clôture, dalles et carreaux de pavage, caniveaux pour le transport de l'eau, surfaces de terrains de jeux, routes et chemins, tuyauteries, murs et planchers pousseurs dans les stations de transfert de déchets, planchers de parkings à voitures et d'avant-cours de garages, épis pour la mise en valeur des terres et des plages, tétrapodes et acropodes pour les défenses côtières et blocs pour ouvrages et murs à la mer.
